# EUROPEAN PATENT SPECIFICATION

(11) **EP 0 463 610 B1**
(45) Date of publication and mention of the grant of the patent: **17.07.1996**
(21) Application number: 91110513.8
(22) Date of filing: 25.06.1991
(51) Int. Cl.: B07C 5/36, B65G 47/51

(54) **Apparatus for sorting products to packaging or cartoning machines**
Einrichtung zum Sortieren von Produkten für Verpackungs- oder Kartoniermaschinen
Dispositif de tri de produits acheminés vers des machines d'emballage ou de mise en cartons

(30) Priority: 28.06.1990 IT 6746890
(43) Date of publication of application: 02.01.1992
(73) Proprietor: HITECH SYSTEMS S.r.l., I-10040 Leini' (Province of Torino) (IT)
(72) Inventor: Delsanto,Mario, IT-10080 Feleto Canavese (IT)
(74) Representative: Modiano, Guido, Dr.-Ing.

(56) References cited:
- EP-A- 0 124 177
- CH-A- 494 160
- PATENT ABSTRACTS OF JAPAN vol. 9, no. 186 (P-377)2 August 1985

## Description

The present invention relates to an apparatus for sorting generic products, in particular confectionery products, pharmaceutical products and the like, to packaging or cartoning machines. EP-A-124177 discloses an apparatus as defined in the preamble of the appended claim 1.

More precisely, the invention relates to sorting apparatuses which comprise a group of belt conveyors, which define a main line, for conveying rows of products arranged transversely to the belt along a main conveyance direction; a plurality of cross-conveyors which are perpendicular to the main conveyance direction and receive the lines of products, arranged in an orderly fashion in rows, and feed them to respective packaging or cartoning machines; transfer means for re-routing the rows of products from the main conveyor to each cross-conveyor and control means for activating said transfer means according to the demand of the respective packaging machine.

The main disadvantage of the sorting apparatuses of the specified type is the random distribution of the rows of products which occurs after each cross-conveyor and which, on one hand, can make unavailable the row of products on a generic cross-conveyor when the corresponding packaging or cartoning machine requires it and, on the other hand, can cause an accumulation of unused rows of products at the end of the main line, with the consequent need to recycle them.

In order to obviate this severe disadvantage, it has already been proposed to provide the main conveyance line with accumulation conveyors having different speeds and with transfer conveyors which are arranged downstream of the accumulation conveyors, are provided with an intermittent advancement motion and suitable for transferring the products to the cross-conveyor which feeds the respective packaging machine or, in the absence of a signal from the machine, to the subsequent section of the main line.

According to this known solution, each accumulation conveyor is provided so as to adjust the flow only toward the packaging machines which are arranged downstream of it, and it can thus easily saturate, causing the progressive jamming of the main conveyor, if the main flow exceeds, for a more or less prolonged period of time (which depends on the capacity of each accumulation conveyor), the demand of products to be fed to said packaging machines.

The aim of the present invention is to eliminate this disadvantage and to provide an apparatus wherein the sorting logic does not depend on the direction of the flow of the main line, in order to avoid both forming regions of accumulation which progressively extend backward along said line and the use of accumulation conveyors, the capacity whereof becomes greater as the extension of the main line and the number of packaging machines fed thereby increase.

According to the present invention, this aim, these important objects and others which will become apparent from the following detailed description are achieved by virtue of the fact that the apparatus comprises:
- a pair of mutually oppositely arranged pivoting diverting arms (28,29) angularly movable between a position of alignement with the distribution belts and a lowered position in which the end of each arm is substantially in contract with the auxiliary belt;
- first optical detection means, arranged at the ends of the main conveyance units which are adjacent to each sorting unit, and second optical detection means, arranged at the ends of each sorting unit,
- electronic processing means, which have analog outputs connected to the belt driving motors and logic inputs connected to the encoders of the motors and to the optical detection means and are programmed so as to generate positions for parking the rows of products on the distribution belts of each sorting unit directly upstream of and downstream of (with reference to the main flow) the opposite diverting arms and so as to always keep at least one of said parking positions occupied in order to allow one diverting arm or the other to selectively deposit a row of products on the auxiliary belt of the respective sorting unit.

Further characteristics and advantages will become apparent from the following detailed description and with reference to the accompanying drawings, which are given by way of non-limitative example and wherein:
figure 1 is a schematic partial elevation view of the apparatus;
figure 1a is a top plan view of figure 1;
figure 2 is an enlarged-scale view of a detail of figure 1;
figure 3 is an enlarged-scale view of a further detail of figure 1;
figures 4 to 13 are schematic views, similar to figure 1, of corresponding operating conditions of the apparatus;
figure 14 is an electric diagram of the electronic control means of the apparatus;
figures 15, 15a, 15b, 15c and 15d are flowcharts of the operating sequences of the apparatus.

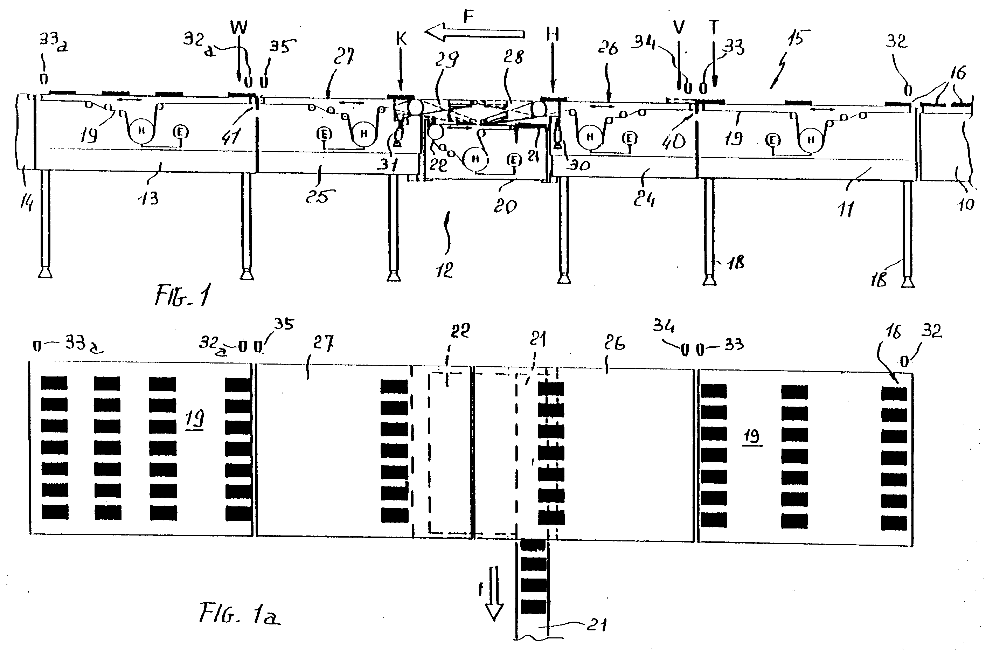

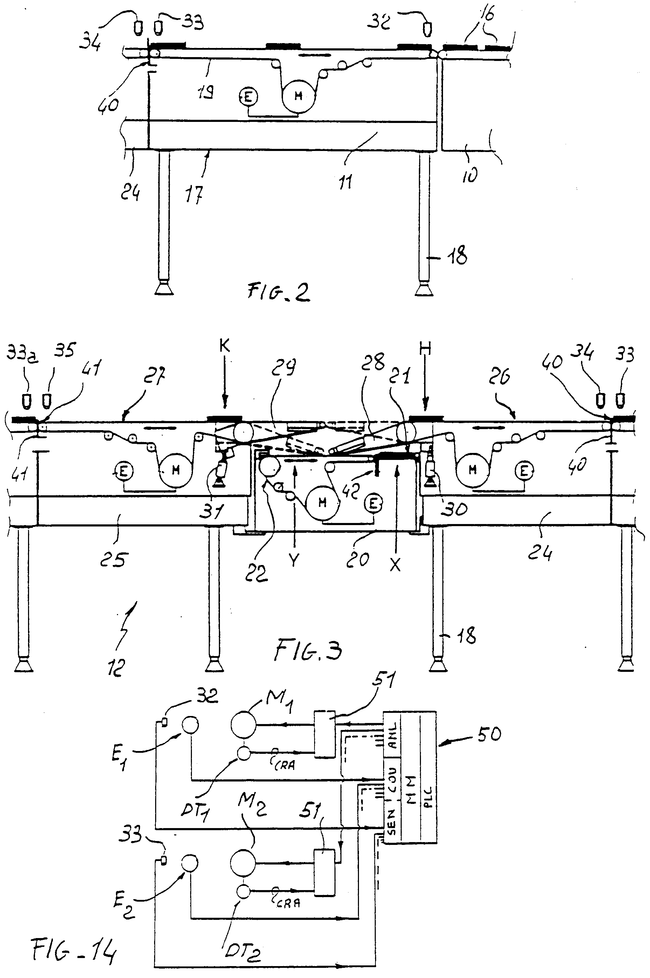

With reference to figures 1 to 3, the reference numerals 10, 11, 13 and 14 indicate a plurality of main conveyance units and the numeral 12 indicates a sorting unit inserted between said main units.

The group of the units 10 to 14 defines a main line 15 for the conveyance of transverse rows 16 of products, for example confectionery products, which are continuously fed upstream of the line 15; each row is constituted by a line of products which is arranged orthogonally, or substantially orthogonally, with respect to the main conveyance direction of the line 15, indicated by the arrow F.

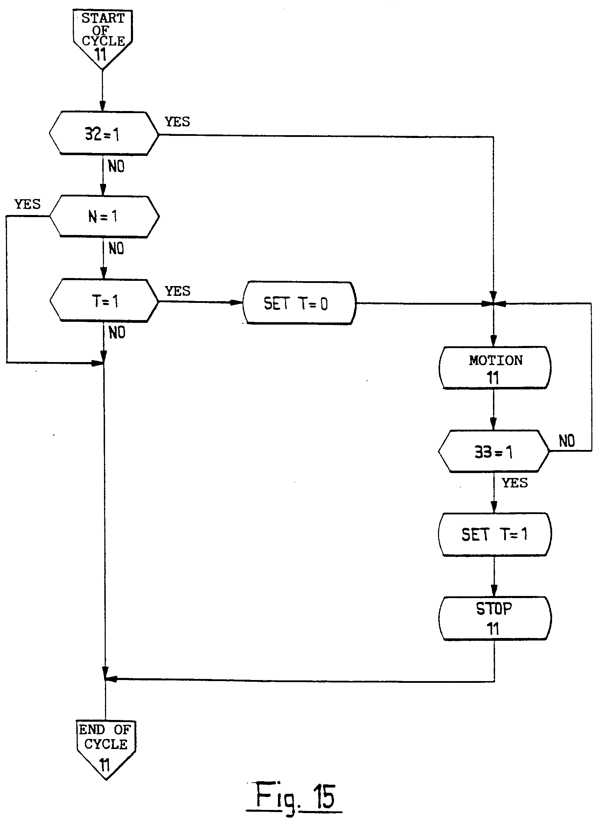

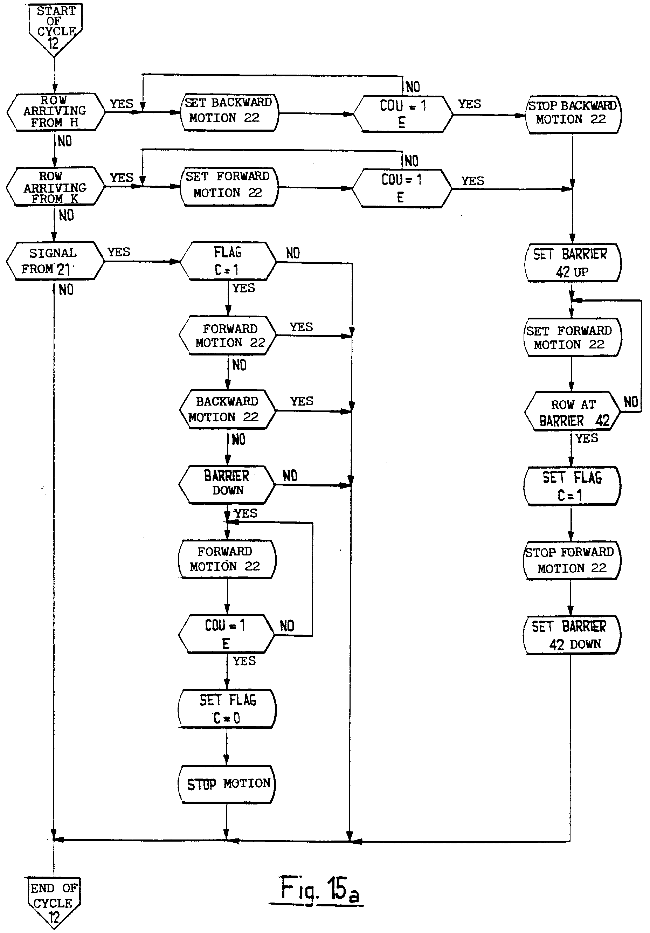

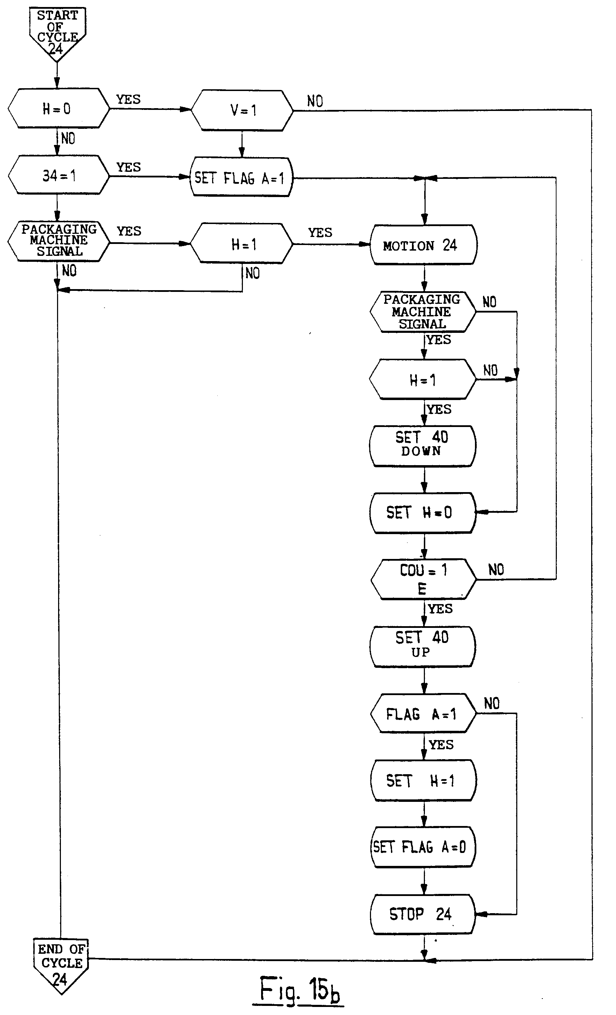

Each main conveyance unit comprises a case-like structure 17 provided with supporting uprights 18 and a bidirectional conveyor belt 19 which is transmitted by a series of rollers and is driven by a motor M with which a speedometer dynamo DT (illustrated in figure 14) and an angular position encoder E, commonly termed "encoder", are associated.

Each sorting unit comprises a central box-like structure 20 which extends perpendicularly to the main conveyance direction F and comprises a sorting belt 21, which can move in a direction f which is orthogonal to the main conveyance direction and is accommodated adjacent to one side of the structure 20, and an auxiliary belt 22 adapted for feeding rows of products 16 to the sorting belt 21. The auxiliary belt 22, which is also bidirectional, is transmitted by rollers, moves in a direction parallel to the main conveyance direction, and is driven by a motor M with which a speedometer dynamo DT and an encoder E are associated.

As clearly illustrated in the figure, the conveyance plane of the belts 21 and 22 is depressed with respect to the main conveyance plane of the belts 19. At the two sides of the central structure 20 there are distribution units 24-25, comprising distribution belts 26-27 which are aligned with the belts 19, and respectively a first diverting arm 28 and a second diverting arm 29 which are arranged opposite each other and can be moved angularly from a position in which they are aligned with the distribution belts 26-27 to a lowered position in which the end of each arm is substantially in contact with the auxiliary belt 22.

Respective fluid-activated jacks 30-31 are provided in order to achieve the angular movement of the diverting arms 28-29. The distribution belts 26-27 are also bidirectional and are driven by respective motors M with which speedometer dynamos and encoders E are associated.

First optical detection means 32-33 and 32a-33a, for example constituted by photocells, are arranged at the upstream and downstream ends (relatively to the main flow) of the main conveyance units 11-13 which are adjacent to each sorting unit 12, and second detection means 34-35 are arranged at the ends of the distribution units which flank each sorting unit. Retractable alignment barriers 40-41-42, actuated in a known manner, are interposed between the main conveyance units 11-13 and the distribution units 24 and 25 and between the auxiliary belt 22 and the sorting belt 21; said barriers, when raised, are adapted for restoring the alignment of the products which form each row 16, for separating two rows which may have moved mutually closer, and, respectively, for allowing the correct transfer of each row of the auxiliary belt 22 to the sorting belt 21.

The logic signals arriving from the encoders E and from the optical detection means are sent to an electronic microprocessor 50, for example constituted by a known PLC (figure 14). Said microprocessor is programmed so as to generate parking positions H-K for the rows of products on the distribution belts 26-27 directly upstream of and respectively downstream of the opposite diverting arms 28-29 (with reference to the main conveyance direction F) and so as to always keep at least one of said parking positions occupied in order to allow one diverting arm or the other to selectively deposit one of the rows of parked products onto the auxiliary belt 22 of the sorting unit 12.

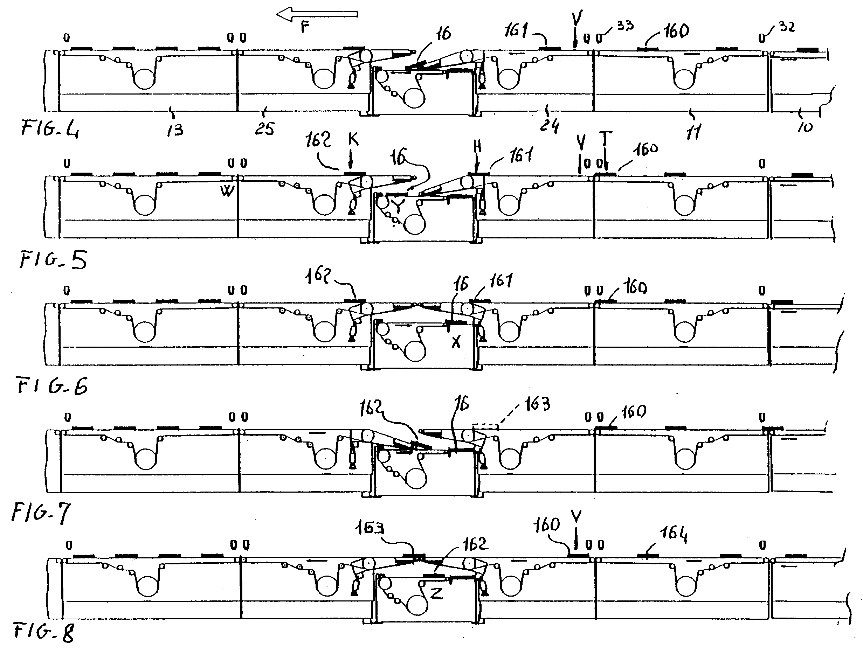

Assuming that not only the parking positions H-K but also the further positions X, Y and Z of the rows or lines of products on the sorting belt 21 and on the auxiliary belt 22, and the positions T, V and W on the main line 15 are significant, the operation of the apparatus is as follows: with reference to figure 4, a row 160 of products fed to the conveyance unit 11 and detected by the sensor 32 is caused to advance so as to reach and occupy the position T; when it has reached said position, the sensor 33, by means of the PLC, stops the motor of the unit 11 (figures 4 and 5). Meanwhile, a row 161 which is possibly present in the position V on the distribution belt 26 is caused to advance to the parking position H and a row 16 which is present in the parking position H is deposited onto the auxiliary belt 22 by virtue of the lowering of the diverting arm 28 and the advancement of the distribution belt 26, which stops when the row 161 reaches the parking position H. The belt 22, moving concordantly with the main flow direction F, moves the row 16 into the position Y (figure 5). Then the diverting arm returns to its idle position and the conveyor 22, moving this time in a direction which is opposite to the main flow F, transfers the row 16 onto the conveyor 21 after lowering the barrier 42 (figure 6).

Since the auxiliary belt 22 is now free, a row of products is deposited thereon to be parked there while waiting to be transferred onto the belt 21. If the row 161 is present in the position H, said row has priority in being deposited on the belt 22 in the manner which has already been described. If instead the position H is momentarily unoccupied, a row 162 of products, which is already parked in the position K, is deposited on the belt 22 by virtue of the movement of the distribution belt 27, which moves in the direction opposite to the main flow direction F, and by virtue of the simultaneous lowering of the arm 29 (figure 7).

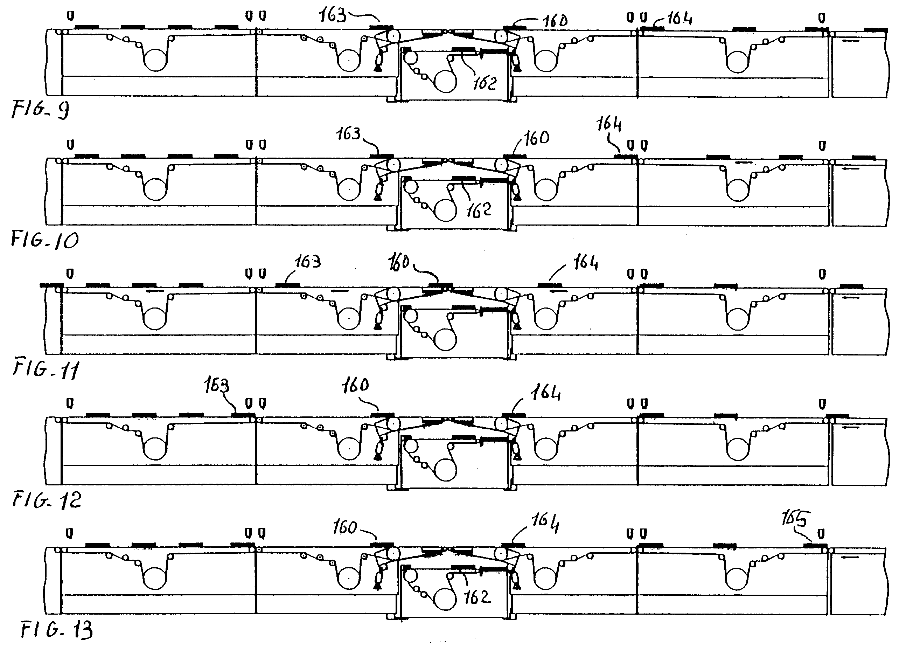

The row 162 remains on the belt 22 in the waiting position indicated by the letter Z so as to be transferred onto the belt 21 as soon as a signal from the packaging machine frees the latter belt from the row 16 which had been transferred thereon earlier. During this wait, the transfer of the rows continues in the following manner: a row 160, motionless in the position T, is transferred into the position V on the belt 26, which moves in the flow direction F in order to move into the position K, by virtue of the concordant motion of the belt 27, a row 163 which is present in the position H (since the belts 21 and 22 are occupied) and simultaneously in order to move the row 160 into the position H which has been freed by the row 163 (figure 9); the arms 28 and 29 are aligned with the belts 26 and 27.

During this transition, a new row 164 reaches position T on the conveyance unit 11, restoring the parking of rows in the positions T, H and K (figure 9).

In the absence of a signal on the belt 21, the row 164 is transferred onto the distribution unit 24 in position V (figure 10); said unit starts its own belt 26, transferring the row 164 into the position H and moving the rows 160 and 163 respectively to K and W after lowering the barrier 41, while a new row 165 is transferred onto the unit 11 (figure 13).

The rows are thus transferred along the main flow direction, and at least one of the parking positions H-K of each sorting unit 12 is constantly occupied by a row of products in order to constantly keep the auxiliary belt 22 of said transfer units fed.

The programming of the above described movements is performed by the PLC 50, with logic inputs SEN which receive the pulses of the optical sensors 32-33-34-35, 32a-33a and with a counter COU which receives the pulses generated by the encoders E1...En, which correspond to the spaces covered by the moving rows.

The memory MM of the PLC 50 stores the program data, which substantially comprise the STOP and START commands correlated to the significant positions H, K, T, V, W on the main line 15 and X, Y, Z on the sorting and auxiliary belts 21-22.

Drivers 51, connected to the analog outputs ANL of the PLC, power the motors and control their rotation by means of feedback circuits CRA which comprise the speedometer dynamos DT1...DTn which are associated with the motors M1...Mn.

Alternatively to the speedometer dynamos, it is possible to use angular positioning devices or in any case analog generators which generate signals that are proportional to the rotation rate of the motors.

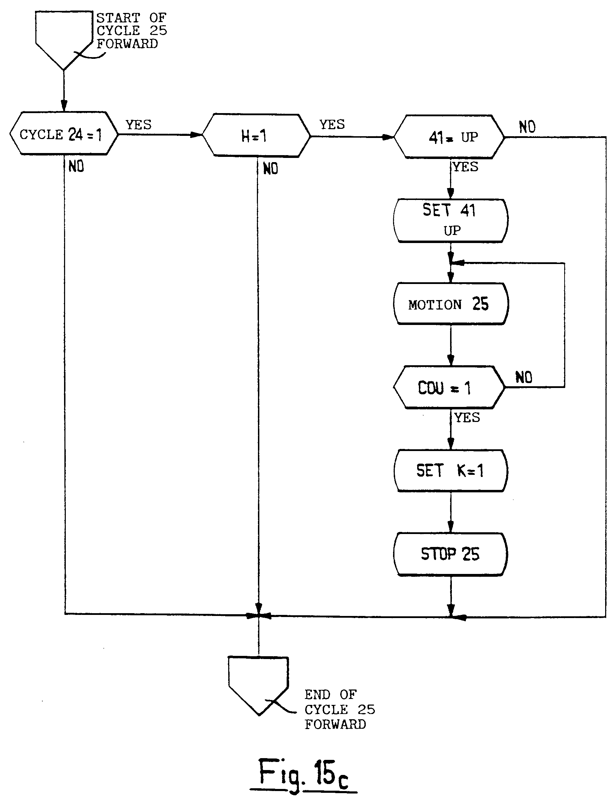

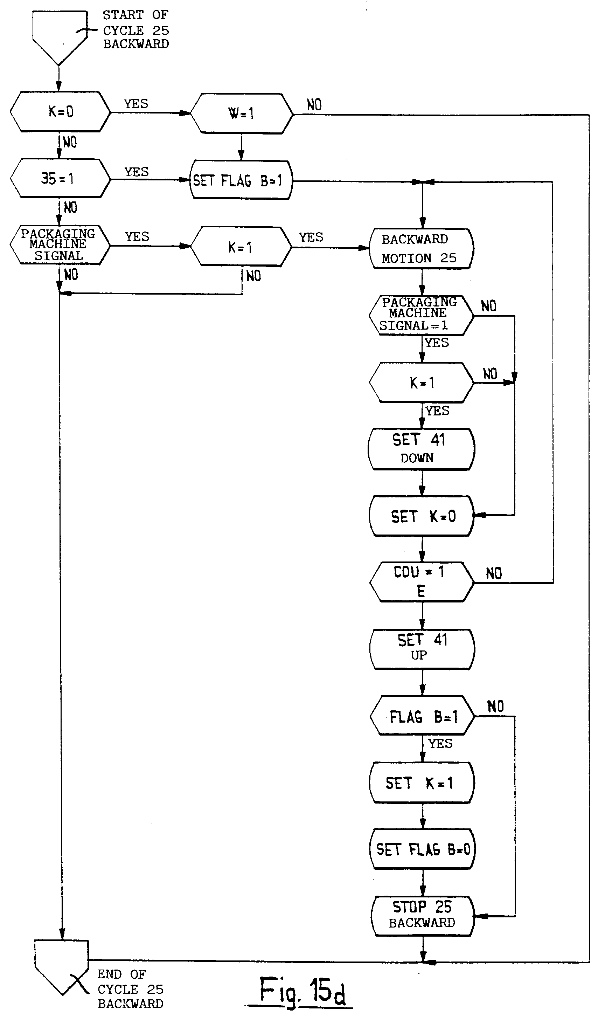

The operating sequences stored in the PLC are clearly summarized in the flowcharts of figures 15 to 15d, which are immediately understandable for the technician on the basis of the references used in the above description; in said flowcharts, "flag" stands for a binary indicator, position "1" stands for "optical detector cutoff" and respectively for "station occupied", position "0" stands for "detector and station free":
- the diagram of figure 15 relates to the operating cycle of a main conveyance unit such as 11 which is arranged upstream (relatively to the conveyance direction F) of a sorting unit such as 12;
- the diagram of figure 15a relates to the operating cycle of the sorting unit 12 and mainly relates to the criteria for moving the auxiliary belt 22; the terms "forward" and "backward" are related to the main conveyance direction F;
- the diagram of figure 15b relates to the operating cycle of the distribution unit 24;
- the diagram of figure 15c and the diagram of figure 15d relate to the operating cycles of the distribution unit 25 in the respective operating conditions with forward and backward motion.

The details for carrying out the invention and the embodiments thereof may naturally be extensively varied, without altering the concept of the invention, with respect to what has been described and illustrated by way of non-limitative example, without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for sorting products to packaging or cartoning machines, which comprises a main line (15) for conveying rows (16), or lines, of products arranged transversely with respect to the conveyance direction (F) and a plurality of transverse conveyors which receive the products arranged in rows, or lines, in an orderly manner and feed them to the packaging or cartoning machines, the apparatus comprising:
- a plurality of main conveyance units (10,11,13,14), arranged side by side in succession so as to define the main conveyance line for the rows of products, each unit comprising a bidirectional belt (19) and a belt driving motor (m) with which a speed detector (DT) and an encoder (E) are associated;
- a plurality of sorting units (12), interposed between the main conveyance units (10,11,13,14), each sorting unit (12) comprising a sorting belt (21) which can move orthogonally to the direction of the belts of the conveyance units (10,11,13,14), an auxiliary parking belt (22) for feeding rows of products to the sorting belt (21), a pair of distribution belts (26,27), each of which is moved by a motor (m) with which a speed detector (DT) and an encoder (E) are associated; the distribution belts (26,27) being aligned with the main conveyance units; characterized by
- a pair of mutually oppositely arranged pivoting diverting arms (28,29) angularly movable between a position of alignment with the distribution belts (26,27) and a lowered position in which the end of each arm (28,29) is substantially in contact with the auxiliary belt (22);
- first optical detection means (32,33), arranged at the ends of the main conveyance units (10,11,13,14) which are adjacent to each sorting unit (12), and second optical detection means (34,35), arranged at the ends of each sorting unit (12);
- electronic processing means (50), which have analog outputs (ANL) connected, with drivers (51) interposed, to the belt driving motors, and have logic inputs (SEN) connected to the encoders of the motors (m) and to the optical detection means (32,33,34,35), programmed so as to generate positions (H,K) for parking the rows of products on the distribution belts (26,27) of each sorting unit (12) directly upstream of and downstream of the opposite diverting arms (28,29) and so as to always keep at least one of said parking positions occupied in order to allow one diverting arm (28) or the other (29) to selectively deposit a row of products onto the auxiliary belt (22) of the respective sorting unit (12).

2. Apparatus according to claim 1, characterized in that each main conveyance unit (10,11,13,14) comprises a case-like structure (17) with supporting uprights (18) which accommodates the bidirectional conveyor belt (19) and the belt driving motor (m) with which the speedometer dynamo (DT) and the encoder (E) are associated.

3. Apparatus according to claim 1, characterized in that each sorting unit (12) comprises a central box-like structure (20) accommodating the sorting belt (21), which moves in a direction (f) orthogonal to the main conveyance direction (F), and the auxiliary belt (22), which moves bidirectionally parallel to the main conveyance direction (F).

4. Apparatus according to claims 1 and 3, characterized in, that the conveyance planes of the auxiliary (22) and sorting belts (21) of each sorting unit are depressed with respect to the conveyance plane of the main conveyance units (10,11,13,14).

5. Apparatus according to claim 4, characterized in that it comprises respective fluid-activated jacks (30,31) for moving each diverting arm (28,29) from the alignment position to the lowered position and vice versa.

6. Apparatus according to claim 1, characterized in that said electronic processing means are constituted by a PLC (50) having logic inputs (SEN) connected to the first and second optical detection means (32-35), a counter (COU) having inputs connected to the encoders (E) of the motors (m), and analog outputs (ANL) for controlling the drivers (51) of the motors.

7. Apparatus according to claims 1 and 6, characterized in that it comprises a feedback circuit (CRA) interposed between each motor (m) and the related driver (51) and comprises the speed detector (DT) which is associated with the motor.

8. Apparatus according to claim 1 and any one of claims 2 to 7, characterized in that the electronic processor is programmed to sort the rows of products (16, 160-165) according to the sequences illustrated in the accompanying flowcharts.

## Patentansprüche

1. Einrichtung zum Sortieren von Produkten für Verpackungs- oder Kartoniermaschinen mit einem Hauptstrang (15) zum Fördern von quer zur Förderrichtung (F) angeordneten Reihen (16) oder Linien von Produkten und einer Mehrzahl von Querförderern , die die in Reihen oder Linien angeordneten Produkte in richtiger Weise empfangen und sie der Verpackungs- oder Kartoniermaschine zuführen, aufweisend:
- eine Mehrzahl von nebeneinander in Reihe angeordnete, den Hauptförderstrang für die Produktreihen festlegende Hauptfördereinheiten (10,11,13,14), wobei jede Einheit ein zweiseitig gerichtetes Band (19) und einen Bandantriebsmotor (M), dem ein Geschwindigkeitsdetektor (DT) und eine Codiereinrichtung (E) zugeordnet ist, aufweist;
- eine Mehrzahl von zwischen den Hauptfördereinheiten (10,11,13,14) angeordnete Sortiereinheiten (12), jeweils mit einem rechtwinklig zur Richtung der Bänder der Fördereinheiten (10,11,13,14) bewegbaren Sortierband (21), einem Hilfsabstellband (22) zum Zuführen von Produktreihen zum Sortierband (21), ein Paar Verteilbänder (26,27), von dem jedes von einem Motor (M) angetrieben wird, dem ein Geschwindigkeitsdetektor (DT) und eine Codiereinrichtung (E) zugeordnet ist, wobei sich die Verteilbänder (26,27) an die Hauptfördereinheiten anschließen, **gekennzeichnet durch**
- ein Paar einander gegenüberliegend angeordnete schwenkbare Umlenkarme (28,29), die winkelig bewegbar sind zwischen einer Position, in der sie zu den Verteilbändern (26,27) fluchten, und einer abgesenkten Position, in der das Ende jedes Armes (28,29) im wesentlichen mit dem Hilfsband (22) in Kontakt ist,
- erste optische Erfassungsmittel (32,33), die an den Enden der Hauptfördereinheiten (10,11,13,14) angeordnet sind, die an jede Sortiereinheit (12) angrenzen und zweite optische Erfassungsmittel (34,35), die an den Enden jeder Sortiereinheit (12) angeordnet sind,
- elektronische Prozessoren (50) mit analogen Ausgängen (ANL), die mit dazwischenliegenden Treibern (51) mit den Bandantriebsmotoren verbunden sind, und mit logischen Eingängen (SEN), die mit den Codiereinrichtungen der Motoren (M) und den optischen Erfassungsmitteln (32,33,34,35) verbunden sind, und programmiert sind, um Positionenen (H,K) zum Abstellen der Produktreihen auf den Verteilbändern (26,27) jeder Sortiereinheit (12) direkt oberhalb und unterhalb der gegenüberliegenden Umlenkarme zu erzeugen, und um immer mindestens eine der Abstellpositionen besetzt zu halten, damit der eine oder der andere Umlenkarm (28,29) abwechselnd eine Produktreihe auf dem Hilfsband (22) der entsprechenden Sortiereinheit (12) ablegen kann.

2. Einrichtung nach Anspruch 1, **dadurch gekennzeichnet, daß** die Hauptfördereinheit (10,11,13) ein kistenförmiges Tragwerk (17) umfaßt, das Tragstützen (18) aufweist, und die zweiseitig gerichteten Förderbänder (19) und den Bandantriebsmotor (M), dem die Geschwindigkeitsmeßmaschine (DT) und der Codierer (E) zugeordnet sind, aufnimmt.

3. Einrichtung nach Anspruch 1, **dadurch gekennzeichnet, daß** jede Sortiereinheit (12) ein zentrales kastenförmiges Tragwerk (20) aufweist, das das sich in einer Richtung (f), rechtwinklig zur Hauptförderrichtung (F) bewegende Sortierband (21) und das Hilfsband (22), das sich zweiseitig gerichtet parallel zur Hauptförderrichtung (F) bewegt, aufnimmt.

4. Einrichtung nach Anspruch 1 und 3, **dadurch gekennzeichnet, daß** die Förderebenen des Hilfsbandes (22) und des Sortierbandes (21) jeder Sortiereinheit in bezug auf die Förderebene der Hauptfördereinheiten (10,11,13,14) abgesenkt sind.

5. Einrichtung nach Anspruch 4, **gekennzeichnet durch** fluidbetätigbare Hubstempel (30,31) zum Bewegen jedes Umlenkarmes (28,29) aus der fluchtenden Position in die abgesenkte Position und umgekehrt.

6. Einrichtung nach Anspruch 1, **dadurch gekennzeichnet, daß** die elektronischen Prozessoren durch ein PLC (50) mit logischen Eingängen (SEN), die mit dem ersten und zweiten optischen Erfassungsmittel (32 bis 35) verbunden sind gebildet werden, ein Zähler (COU) Eingänge, die mit den Codiereinrichtungen (E) der Motoren (M) verbunden sind, und analoge Ausgänge (ANL) zum Steuern der Treiber (51) der Motoren aufweist.

7. Einrichtung nach Ansprüchen 1 und 6, **dadurch gekennzeichnet, daß** sie einen zwischen jedem Motor (M) und dem Treiber (51) angeordneten Rückkopplungskreis (CRA) und dem den jedem Motor zugeordneten Geschwindigkeitsdetektor (DT) aufweist.

8. Einrichtung nach Anspruch 1 oder einem der Ansprüche 2 bis 7, **dadurch gekennzeichnet, daß** der elektronische Prozessor programmiert ist, die Produktreihen (16,160 bis 165) zu Sequenzen zu sortieren wie sie in den beigefügten Ablaufdiagrammen dargestellt sind.

## Revendications

1. Appareil pour trier des produits vers des machines d'emballage ou d'encartonnage, qui comprend une ligne principale (15) pour transporter des rangées (16) ou des lignes de produits, agencées transversalement par rapport à la direction de transport (F) et une pluralité de transporteurs transversaux qui reçoivent les produits agencés en rangées ou en lignes de manière ordonnée et les fournissent aux machines d'emballage ou d'encartonnage, l'appareil comprenant :
- une pluralité d'unités de transport principales (10,11, 13,14) agencées côté à côte en série pour définir la ligne de transport principale pour les rangées de produits, chaque unité comprenant une bande bidirectionnelle (19) et un moteur d'entraînement (m) de la bande, auquel un capteur de vitesse (DT) et un encodeur (E) sont associés ;
- une pluralité d'unités de triage (12) disposées entre les unités de transport principales (10,11,13,14), chaque unité de triage (12) comprenant une bande de triage (21) qui peut se déplacer orthogonalement à la direction des bandes des unités de transport (10,11,13,14), une bande de parcage auxiliaire (22) pour fournir des rangées de produits vers la bande de triage (21), une paire de bandes de distribution (26,27) dont chacune est déplacée par un moteur (m) auquel un détecteur de vitesse (DT) et un encodeur (E) sont associés ; les bandes de distribution (26,27) étant alignées avec les unités de transport principales ;
caractérisé par :
- une paire de bras (28,29) pivotants de dérivation, agencés de façon mutuellement opposée, déplaçables angulairement entre une position d'alignement avec les bandes de distribution (26,27) et une position abaissée dans laquelle l'extrémité de chaque bras (28,29) est sensiblement en contact avec la bande auxiliaire (22) ;
- des premiers moyens de détection optique (32,33) agencés aux extrémités des unités de transport principales (10,11, 13,14), qui sont adjacentes à chaque unité de triage, et des seconds moyens de détection optique (34,35) agencés aux extrémités de chaque unité de triage (12) ;
- des moyens électroniques de traitement (50) qui présentent des sorties analogiques (ANL) reliées, via des circuits de commande (51) interposés, aux moteurs d'entraînement des bandes, et présentent des entrées logiques (SEN) reliées aux encodeurs des moteurs (m) et aux moyens de détection optique (32,33,34,35) programmés de façon à engendrer des positions (H,K) pour parquer les rangées de produits sur les bandes de distribution (26,27) de chaque unité de triage (12) directement en amont et en aval des bras de dérivation opposés (28,29), et de façon à conserver toujours au moins une desdites positions de parcage occupées afin de permettre à un bras de dérivation (28) ou à l'autre (29) de déposer sélectivement une rangée de produits sur la bande auxiliaire (22) de l'unité de triage respective (12).

2. Appareil selon la revendication 1,
caractérisé en ce que chaque unité de transport principale (10,11,13,14) comprend une structure en forme de boîtier (17) avec des montants de support (18), qui reçoit la bande transporteuse bidirectionnelle (19) et le moteur d'entraînement (m) de la bande, auquel la dynamo (DT) du compteur de vitesse et l'encodeur (E) sont associés.

3. Appareil selon la revendication 1,
caractérisé en ce que chaque unité de triage (12) comprend une structure centrale en forme de boîtier (20) recevant la bande de triage (21), qui se déplace dans une direction (F) orthogonale à la direction de transport principale (F), et la bande auxiliaire (22), qui se déplace, de façon bidirectionnelle, parallèlement à la direction de transport principale (F).

4. Appareil selon les revendications 1 et 3,
caractérisé en ce que les plans de transport des bandes auxiliaire (22) et de triage (21) de chaque unité de triage sont abaissés par rapport au plan de transport des unités de transport principales (10,11,13,14).

5. Appareil selon la revendication 4,
caractérisé en ce qu'il comprend des vérins respectifs actionnés par fluide (30,31) pour déplacer chaque bras de dérivation (28,29) de la position d'alignement vers la position abaissée et réciproquement.

6. Appareil selon la revendication 1,
caractérisé en ce que lesdits moyens électroniques de traitement sont constitués par un ordinateur (PLC) (50) ayant des entrées logiques (SEN) reliées aux premiers et seconds moyens de détection optique (32-35), un compteur (COU) ayant des entrées reliées aux encodeurs (E) des moteurs (m), et des sorties analogiques (ANL) pour commander lesdits circuits de commande (51) des moteurs.

7. Appareil selon les revendications 1 et 6,
caractérisé en ce qu'il comprend un circuit de rétroaction (CRA) disposé entre chaque moteur (m) et le circuit de commande concerné (51) et comprend le détecteur de vitesse (DT) qui est associé au moteur.

8. Appareil selon la revendication 1 et l'une quelconque des revendications 2 à 7,
caractérisé en ce que le processeur électronique est programmé pour trier les rangées de produits (16, 160-165) selon les séquences illustrées sur les diagrammes annexés.
